# FASCICULE DE BREVET EUROPEEN

(11) **EP 0 611 461 B1**
(45) Date de publication et mention de la délivrance du brevet: **01.05.1996**
(21) Numéro de dépôt: 93900230.9
(22) Date de dépôt: 05.11.1992
(51) Int. Cl.: G06F 1/00, E05G 1/00

(54) **DISPOSITIF POUR LA PROTECTION PAR CONFINEMENT D'UNE INSTALLATION INFORMATIQUE.**
EINRICHTUNG ZUM SCHUTZ EINER RECHNERANLAGE DURCH EINSCHLIESSEN.
DEVICE FOR PROTECTING A COMPUTER FACILITY BY RESTRICTING ACCESS THERETO

(30) Priorité: 05.11.1991 FR 9113117
(43) Date de publication de la demande: 24.08.1994
(73) Titulaire: DECANTE, Patrick, F-92260 Fontenay-aux-Roses (FR)
(72) Inventeur: DECANTE, Patrick, F-92260 Fontenay-aux-Roses (FR)
(86) Numéro de dépôt international: FR9201035
(87) Numéro de publication internationale: WO9309488

(56) Documents cités:
- EP-A- 0 235 615
- DE-U- 8 911 024
- DE-U- 9 015 869
- US-A- 4 818 986
- IBM TECHNICAL DISCLOSURE BULLETIN. vol. 27, no. 4A, Septembre 1984, NEW YORK US, pages 2283-2284, COLEN "ELECTRONIC SECURITY KEY"

## Description

La présente invention concerne la protection d'installations informatiques. Elle concerne plus particulièrement un dispositif pouvant être directement associé à une installation informatique préexistante ou lors de sa mise en place, permettant de la protèger contre d'éventuelles manipulations frauduleuses, violences et/ ou agressions par des agents extérieurs.

Les ordinateurs sont maintenant très largement utilisés et, par suite, les informations qu'ils contiennent sont de plus en plus importantes voire même confidentielles.

C'est pourquoi, dans la grande majorité des cas, les installations informatiques nécessitent une protection sérieuse et efficace. On peut citer, par exemple, des installations informatiques intervenant dans des domaines scientifiques ou de sécurité, mais également des postes de travail servant à gérer une entreprise : comptabilité, gestion des salaires, gestion des stocks et d'échanges commerciaux divers etc.

Aussi, de multiples investigations ont été menées afin d'empêcher toute "fuite" d'informations, toute utilisation frauduleuse de celles-ci ou sabotage.

Les recherches de protection se sont orientées selon deux axes principaux :
- la protection "physique" plus ou moins complète de l'installation informatique;
- la protection "intellectuelle" du contenu de l'installation informatique.

On entend par protection physique, des dispositifs ou moyens permettant d'isoler physiquement les parties de l'installation contenant les informations que l'on souhaite protéger ou les moyens d'accès physiques à ces informations. Ces dispositifs ou moyens divers sont destinés à empêcher le vol ou l'utilisation non autorisée des informations, mais aussi tout risque d'agression par des agents extérieurs tels que la chaleur, la poussière, le feu, l'eau.

Ainsi, les boîtes, fichiers et autres contenants, munis d'une clef ou pas, destinés aux disquettes, n'offrent pas de résistance mécanique sérieuse et, en plus, sont souvent rangés dans des armoires de bureau avec d'autres documents, sans discernement particulier et sans qu'une protection sélective soit prévue vis-à-vis des autres objets d'utilisation banalisée. Ils peuvent donc être facilement dérobés avec tout leur contenu d'autant qu'ils sont généralement d'un encombrement réduit. Naturellement, ce vol n'a que peu d'importance en terme de prix alors qu'il est majeur en raison de la perte des informations.

Par ailleurs, ces manipulations de "protection", qui paraissent souvent très fastidieuses à l'opérateur, ne sont effectuées qu'en cas d'absence prolongée.

On connaît également l'emploi de disques durs extractibles pour stocker les informations de bases. Ils présentent l'inconvénient d'une part d'être onéreux et de fonctionner lentement, et d'autre part, de n'offrir une protection efficace que s'ils sont logés en fin de travail dans des armoires renforcées . Cette méthode est lourde de manipulations et entraîne obligatoirement une interruption des travaux en cours; elle n'est donc employée, comme précédemment, qu'en cas d'absence prolongée.

D'autres protections applicables de façon éparse et variable ont été imaginées telles que le verrouillage du clavier à l'aide d'une clef, les marquages anti-vol, les brides de fixation des matériels aux supports sur lesquels ils reposent etc. Ce type de protection n'est cependant que ponctuel et rarement mis en pratique régulièrement. Par suite, ces moyens sont peu efficaces.

On peut citer, pour mémoire, les coffres et armoires blindés et/ou anti-feu, plus ou moins résistantes et essentiellement destinées au rangement des disques, disquettes, cassettes et bandes magnétiques.

Il serait irréaliste de penser à y ranger aussi le matériel proprement dit : unités centrales, écrans, claviers et autres.

Par ailleurs, les unités centrales existantes comprennent généralement un coffret fixé à un châssis par des vis et présentant en face avant une ou plusieurs portes d'accès au(x) lecteur(s) de disquettes ou de cassettes, la mise en contact du clavier avec l'unité centrale s'effectuant au moyen d'une clef relativement simple. Malheureusement, même lorsque celle-ci est utilisée consciencieusement, le démontage des vis permet d'ouvrir le coffret et d'accéder aux organes intérieurs, notamment aux contacts, très facilement et très rapidement, et de les court-circuiter pour rendre inopérante la protection et ce, sans équipement particulier. En outre, cette protection n'est que physique et ne concerne évidemment que ce qui se trouve à l'intérieur du coffret. Par ailleurs, avec ce système, les imprimantes ne bénéficient d'aucune protection spécifique.

Dans l'objectif d'assurer une protection physique plus globale et plus efficace, on a pensé enfermer l'ordinateur et ses éléments connexes dans un conteneur mobile spécial, fermé à clef. Ainsi, le document EP-A-0 172 762 décrit un ensemble qui comprend un plateau sur lequel on pose l'unité centrale et l'écran de l'ordinateur, ainsi que des parois articulées permettant d'enfermer l'unité centrale, l'écran et le clavier dans le conteneur par repliement des parois et coulissement vers le fond du conteneur. Lorsque l'opérateur souhaite travailler, il doit "installer" son matériel c'est-à-dire ouvrir le conteneur, faire monter l'unité centrale et l'écran jusqu'à la hauteur désirée, positionner le clavier et éventuellement d'autres tablettes escamotables pour poser des documents etc. Bien entendu, en fin de travail, il doit effectuer autant de manipulations inverses. En outre, pour une efficacité satisfaisante, l'opérateur devrait effectuer ces manipulations dès qu'il quitte son poste. On comprend bien que, d'un point de vue pratique, ceci est quasiment inconcevable car cette succession de manipulations est trop fastidieuse et entraîne une perte de temps considérable, mais également parce qu'elle entraîne impérativement l'arrêt des opérations en cours.

D'autres mobiliers et stations de travail intégrées et mobiles ont été également proposés, mais leur mise en oeuvre est longue comme dans les cas précités. En outre, elles présentent en général le même inconvénient de laisser la face avant libre d'accès au(x) lecteur(s) de disquettes ou de cassettes. Cette faiblesse des systèmes proposés est extrêmement gênante puisqu'il est alors possible en interrompant puis en rétablissant successivement le courant, de recharger un système d'exploitation qui contournera, grâce aux informations introduites, les protections mises en standard par un logiciel prévu à cet effet.

En synthèse, tous les dispositifs destinés à assurer la protection physique d'une installation informatique se sont révélés d'un emploi long et peu pratique et de plus ne satisfont pas les critères esthétiques très souvent recherchés dans les environnements de travail. Mais leur inconvénient majeur reste leur efficacité très limitée puisque, selon les cas, ils laissent libre l'accès au système d'exploitation ou encore à l'écran ou à l'imprimante par toute personne non habilitée, simplement de passage dans le bureau par exemple.

Face à ces lacunes, les recherches se sont orientées vers l'élaboration de logiciels de protection. C'est ce que l'on qualifie ici de protection "intellectuelle", c'est-à-dire la neutralisation des accès électroniques aux informations.

On peut les répartir en trois catégories, à savoir les dispositifs à "mot de passe", les dispositifs à encryptage des données et les programmes "anti-virus".

Les dispositifs à mot de passe consistent à contrôler l'accès à un système d'exploitation ou à une application donnée, locale ou sur un réseau connexe, par l'intermédiaire d'un mot de passe. Ce mode de protection nécessite une gestion rigoureuse et, malheureusement, l'expérience montre que le mot de passe, supposé secret, devient vite connu de nombreuses personnes théoriquement non concernées, en raison de leur simplicité (date de naissance, prénom etc.) ou d'un aide-mémoire trop visible ou trop évident à déchiffrer, ou encore par effet de voisirage. En outre, pour une bonne efficacité, ces dispositifs exigent l'utilisation du mot de passe dès que l'opérateur quitte son poste de travail; l'opérateur doit donc obligatoirement terminer toute opération en cours pour pouvoir s'éloigner de son poste. Or, ceci est extrêmement contraignant et engendre des pertes de temps importantes de sorte que l'opérateur est peu à peu amené à n'utiliser le mot de passe qu'en cas d'absence prolongée. Toutefois, cette protection reste intéressante lorsqu'elle est couplée avec d'autres moyens.

Les dispositifs à encryptage des données consistent à rendre celles. illisibles par les moyens ordinaires du système d'exploitation. Ils ont pour but de protéger les fichiers mais non l'accès aux programmes qui les traitent. Leur domaine privilégié est donc le transfert de données. On peut également par cette voie, introduire une certaine "résistance" à la perte accidentelle d'informations. Néanmoins, ils ralentissent les transferts de données et, pour pouvoir être utilisés, le matériel doit disposer de l'algorithme d'encryptage et de ses codes, ce qui rend ces procédés vulnérables et faussement sécurisants. D'ailleurs, ils passionnent les spécialistes qui les mettent "hors-service" en utilisant des techniques mathématiques de décryptage. C'est ainsi que les moins "résistants" sont maintenant du domaine public tandis que les plus élaborés sont réservés à certains domaines spécifiques tels que la Sécurité Défense.

Enfin, tout récemment est apparue une nouvelle hantise : les "virus" informatiques. Il s'agit de programmes qui viennent "infester" les programmes existants dans une installation informatique donnée, l'"infection" pouvant se transmettre tour à tour à d'autres fichiers. Les effets pervers de ces virus peuvent simplement provoquer des réactions surprenantes du système ou l'apparition de messages curieux. Mais de manière beaucoup plus grave, ils peuvent entraîner soit la destruction, au moins en partie, des fichiers, des programmes ou des informations simples, soit leur modification. Ils peuvent également être destinés à fournir des informations confidentielles à l"'espion". Pour parer ce nouveau type de sabotage, des programmes de protection des installations informatiques appelés "programmes anti-virus", ont été mis au point afin de détecter la présence de virus dans des fichiers exécutables selon un mode de contrôle variable, à savoir agissant en permanence ou sur commande soit à chaque transfert de fichier avec l'extérieur, soit systématiquement en phase finale de la procédure de démarrage du système. Néanmoins, ces programmes anti-virus ne permettent qu'une protection au cas par cas car, dès que la parade à un virus est connue, les "fabricants" de virus en trouvent de nouveaux qui échappent bien entendu aux parades connues.

Au vu de ce qui précède, on peut constater que les logiciels de protection, qui déjà n'assurent qu'une protection intellectuelle et non pas physique, peuvent être de plus anéantis facilement par des "spécialistes" professionnels ou amateurs. Toutefois, ils représentent une protection complémentaire utile notamment lorsque le système est connecté à un réseau. Mais leur lenteur et leur lourdeur de manipulation limitent souvent leur emploi. En outre, ils nécessitent en général l'intervention d'au moins un informaticien pour traiter les incompatibilités qui peuvent survenir avec les logiciels applicatifs utilisés.

EP-A-0 235 615 fait connaître un dispositif de sécurité comportant sur le boîtier de l'unité centrale une clé de verrouillage actionnant un interrupteur bloquant le système d'entraînement de la disquette, et donc interdisant totalement le fonctionnement de l'ordinateur.

DE-U-8911024.2 enseigne d'enfermer l'unité centrale dans un coffre muni d'ouvertures destinées à la ventilation et au passage des connexions. Une trappe d'accès indépendante de l'ouverture principale du coffre est prévue pour accéder à une clé de mise en marche de l'unité centrale ou à un interrupteur. Le fonctionnement de l'ordinateur est en tout ou rien. L'accès seul aux informations ne peut pas être inhibé.

La présente invention remédie à tous ces inconvénients en proposant un dispositif de protection d'installations informatiques efficace, simple de mise en place et d'utilisation, permettant de protéger tout particulièrement les accès aux informations sans interrompre le travail de l'unité centrale. En outre, elle permet également de protéger le matériel proprement dit contre le vol et autres agressions par des agents extérieurs (chaleur, poussière, feu, eau, etc...).

A cette fin, l'invention a pour objet un dispositif pour la protection par confinement d'une installation informatique comportant au moins une unité centrale , et des périphériques d'entrée/sortie comprenant un élément d'affichage et des moyens d'accès aux informations et éventuellement un élément d'impression des informations, du type qui comprend une enceinte de confinement munie d'une porte, destinée à renfermer au moins l'unité centrale de ladite installation informatique, associée à des moyens de verrouillage et de déverrouillage de la transmission d'une tension pour respectivement verrouiller et déverrouiller les accès électroniques aux informations contenues dans l'installation informatique, lesdits moyens d'accès aux informations étant situés à l'extérieur de l'enceinte, porte fermée, étant caractérisé en ce que la porte comporte des moyens de fermeture et que la fermeture de ladite porte enclenche lesdits moyens de verrouillage et de déverrouillage qui comprennent au moins un contact asservi à la porte de ladite enceinte et destiné à commander un circuit de sécurité, ledit circuit de sécurité comprenant un interrupteur intercalé sur au moins l'une des lignes reliant lesdits périphériques d'entrée/sortie à l'unité centrale, moyennant quoi seuls les moyens d'accès sont neutralisés par la fermeture de la porte mais pas le fonctionnement de l'unité centrale.

Selon d'autres caractéristiques de cette invention :
- les moyens d'accès aux informations consistent en un clavier ;
- l'enceinte de confinement renferme en outre un ou plusieurs éléments connexes à l'installation ;
- l'enceinte de confinement est munie de prises extérieures permettant un raccordement à au moins un périphérique ;
- le circuit de sécurité est relié aux moyens d'accès aux informations ;
- l'installation informatique comprend en outre un élément d'impression des informations situé à l'extérieur de l'enceinte et le circuit de sécurité est relié audit élément d'impression des informations ;
- le circuit de sécurité est relié à l'élément d'affichage ;
- le circuit de sécurité est indépendant de l'installation informatique ;
- le circuit de sécurité comprend un interrupteur intercalé sur la ligne reliant les moyens d'accès à l'unité centrale ;
- la porte est munie de moyens de verrouillage et de déverrouillage mécaniques associés à des moyens de commande mécaniques ;
- la porte est munie de moyens de verrouillage et de déverrouillage mécaniques associés à des moyens de commande électroniques.

L'invention sera mieux comprise à la lecture de la description détaillée ci-après d'un mode de réalisation donné à titre illustratif mais non limitatif, en regard des dessins annexés dans lesquels :
- la figure 1 est une vue schématique d'un dispositif selon l'invention en position d'ouverture permettant l'accès aux informations contenues dans l'installation informatique.
- La figure 2 est une vue schématique d'un dispositif selon l'invention en position de fermeture interdisant l'accès aux informations contenues dans l'installation informatique.

Le dispositif de protection selon l'invention est décrit dans le cadre d'une installation informatique comprenant une unité centrale (10) avec lecteurs de disquettes , un écran de visualisation (12), un clavier (14) et une imprimante (16).

Selon l'invention, il s'agit d'un mode de protection par confinement. Ainsi, le dispositif comprend une enceinte 18 munie d'une porte 20 et dans laquelle on place l'unité centrale 10. L'écran de visualisation 12, le clavier 14 et l'imprimante 16 sont situés à l'extérieur de l'enceinte 18.

Bien entendu, on pourrait choisir de placer également dans l'enceinte 18 l'écran de visualisation 12 et/ou l'imprimante 16. Cependant, dans un bureau par exemple où l'espace est souvent compté et où les critères pratiques sont très importants, l'usager dispose son clavier et son écran en face de lui et l'imprimante est souvent commune à plusieurs postes. Par suite, il est parfois préférable de placer dans l'enceinte uniquement la ou les unités centrales.

L'enceinte 18 est munie d'une ou plusieurs prises extérieures permettant un raccordement à des périphériques. Par périphériques, on désigne ici un clavier, un écran de visualisation, une imprimante, des lignes de communication, etc.

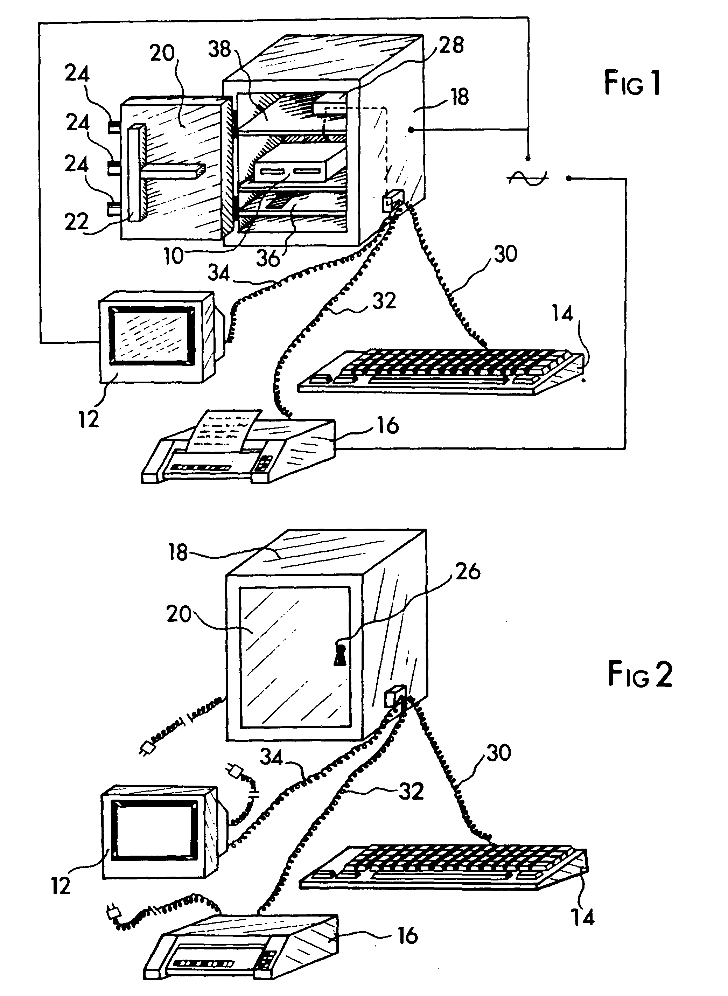

Comme on peut le voir sur la figure 1, la porte 20 de l'enceinte 18 est munie de moyens de verrouillage et de déverrouillage mécaniques 22 connus en soi devant manoeuvrer des pènes 24 et d'une entrée de serrure 26.

En outre, on prévoit des contacts reliés respectivement à l'unité centrale 10 et à chacun des périphériques dont on veut contrôler l'usage, au gré de l'utilisateur. On prévoit également au moins un contact asservi à la porte 20. Il peut s'agir de contacts classiques ou de systèmes optiques.

Par suite, le simple fait de fermer la porte 20 permet de se placer en situation de protection. En effet, lorsque l'on rabat la porte 20 (figure 2), le mécanisme 22 provoque l'ouverture d' un interrupteur 28 situé à l'intérieur de l'enceinte 18. Cet interrupteur 28 ouvert rend inopérants les accès électroniques aux informations contenues dans l'installation informatique. Ainsi, le clavier 14 est déconnecté de l'unité centrale 10 par neutralisation de la ligne 30 et le fait d'appuyer sur les touches de celui-ci n'a plus aucun effet.

En outre, l'affichage de l'écran de visualisation 12 disparaît par neutralisation de la ligne 32 et l'impression de documents est interrompue par neutralisation de la ligne 34.

Dans le cas décrit ici, on a prévu un seul interrupteur multipolaire 28 pour contrôler à la fois le clavier, l'écran et l'imprimante. On voit d'ailleurs sur la figure 1, que les lignes 30, 32 et 34 sont reliées à cet interrupteur unique.

Cependant, dans d'autres formes de réalisation, on peut prévoir plusieurs interrupteurs pour contrôler sélectivement certaines fonctions. Dans certains cas, on peut par exemple, ne vouloir la neutralisation que du seul clavier. Cela permet d'interdire l'accès aux informations tout en poursuivant l'impression d'informations et/ou tout en conservant l'affichage de messages de fonctionnement sur l'écran.

On peut remarquer ici que la neutralisation n'agit que sur les courants faibles (lignes 30, 32 et 34) et non sur les courants d'alimentation proprement dite des périphériques. Ceci présente l'avantage de ne pas créer de pertes de temps inutiles dues à l'inertie des périphériques comme par exemple le chauffage de l'écran pour qu'un affichage quelconque puisse apparaître.

Enfin, en réalisant les manipulations inverses c'est-à-dire en déverrouillant la serrure 26 au moyen d'une clef, à piston par exemple, on ouvre la porte 20 (figure 1) et on rétablit ipso facto l'accès aux informations. Cela signifie que l'unité centrale 10 est à nouveau accessible physiquement et électroniquement, et que l'on peut notamment effectuer des opérations par action sur le clavier 14. En outre, on rétablit l'affichage des informations et les fonctions d'impression, si l'écran 12 et l'imprimante 16 avaient été neutralisés.

Par ailleurs, les programmes lancés avant fermeture de l'enceinte 18 peuvent se poursuivre sans interruption lors du passage en situation de protection.

Dans ce cas, on peut conduire des travaux longs sans que cela n'exige la présence de l'utilisateur ou que cela laisse l'installation accessible à des personnes malveillantes ou non autorisées.

En outre, la neutralisation de l'affichage des informations sur l'écran de visualisation prive totalement d'informations celui qui arriverait à manipuler frauduleusement le clavier puisqu'il ne connaîtrait aucun des résultats de ses manipulations et à plus forte raison aucune information, même s'il réussissait à accéder aux programmes et/ou aux fichiers.

L'invention présente l'avantage d'être une solution simple et globale puisqu'elle permet, lorsque l'installation est mise en situation de sécurité par fermeture de la porte, soit de laisser l'installation poursuivre seule son processus en cours, soit de provoquer une commande particulière telle que sauvegarde du travail en cours ou arrêt du travail déjà lancé, ou autre commande spécifique au programme utilisé. Par conséquent, on peut obtenir automatiquement la mise en sécurité des données informatiques même si l'usager est pressé par le temps car cela ne suppose de sa part que la simple opération de fermeture de la porte de l'enceinte, sans qu'il soit nécessaire de prendre des précautions spécifiquement informatiques.

D'autres moyens peuvent être utilisés pour commander le verrouillage et le déverrouillage de la porte 20 de l'enceinte 18. On peut citer par exemple des moyens électroniques tels que les cartes magnétiques ou l'emploi de combinaisons de type coffre-fort. Néanmoins, selon l'importance des informations contenues ou accessibles par l'installation informatique, on préfère souvent ne pas employer de moyens extérieurs facilement repérables (tels que les moyens mnémotechniques pour ne pas oublier une combinaison) pour réduire les risques de perte, de vol ou d'utilisation à l'insu de la personne habilitée.

D'une manière générale, on utilise avantageusement des moyens de verrouillage et/ou de neutralisation rapides et faciles à mettre en oeuvre pour les personnes habilitées.

Par ailleurs, il a été décrit précédemment un circuit de sécurité sous forme d'un interrupteur mais d'autres types connus peuvent être adaptés au dispositif de l'invention.

Selon les applications de l'invention, on prévoit un circuit de sécurité totalement indépendant de l'installation informatique ou au contraire fonctionnant au moyen de cette installation.

Les exemples donnés ci-dessus ne sont en aucun cas exhaustifs et l'homme du métier peut, selon ses besoins et ses moyens, rendre la protection plus ou moins complexe et/ou plus ou moins sélective. On peut constater ici que le dispositif conforme à l'invention est modulable selon les besoins particuliers de l'utilisateur.

En outre, pour les câbles reliant l'installation informatique protégée aux périphériques choisis pour n'être pas déconnectés par la fermeture de la porte 20, on prévoit avantageusement des goulottes intérieures permettant de faire passer des câbles de liaison avec lesdits périphériques. Le trajet de ces goulottes est de préference en forme de U et est muni de chicanes pour éviter l'introduction par l'extérieur d'objets divers, de projections de fluide, de flammes, etc.

Dans l'objectif d'améliorer la protection de l'installation informatique contre des agressions provoquées par des agents extérieurs, on prévoit en outre un mécanisme de ventilation aspirant, par exemple, l'air extérieur à travers un filtre pour le souffler au bas de l'intérieur de l'enceinte 18 qu'il maintient ainsi en légère surpression lorsque la porte 20 est entrebaillée afin de limiter l'entrée de poussières. Cette surpression peut également être utilisée à d'autres fins. En effet, et contrairement à l'exemple de réalisation décrit ci-dessus, il y a des cas où l'on peut ne pas vouloir la fermeture automatique de la porte de l'enceinte. Dans ce cas, la surpression permet d'éviter une fermeture accidentelle non souhaitée.

On sait par ailleurs, que le matériel informatique est, de par ses éléments constitutifs, sensible à la chaleur et aux variations de température. Par suite, pour maintenir une atmosphère aussi stable que possible, l'air extérieur aspiré est soufflé à l'intérieur de l'enceinte 18 au travers d'une grille de réfrigération (non représentée) dont l'échangeur thermique est situé à l'extérieur de l'enceinte 18. On peut aussi prévoir un tube flexible permettant d'aspirer de l'air frais en un point distant, par exemple dans une gaine de ventilation d'un local technique renfermant des serveurs de réseau. Bien entendu, d'autres moyens de climatisation peuvent être associés à l'enceinte 18.

L'enceinte 18 peut également être blindée ou élaborée en un matériau anti-feu; elle peut de plus renfermer des moyens de détection automatique d'incendie interrompant, par exemple, l'alimentation électrique des matériels connectés en présence de fumées dans l'enceinte et déclenchant, dans une phase séparée, des moyens pour lutter contre les incendies tels que des cartouches de gaz carbonique, de gaz inerte ou tout autre fluide conforme aux réglementations en vigueur.

On peut aussi munir les parois de l'enceinte 18 de panneaux de décoration afin de satisfaire aux critères esthétiques souvent très importants dans les environnements de travail et en particulier dans les bureaux. En outre, l'enceinte 18 peut être dissimulée par exemple sous un bureau.

Pour loger des éléments connexes à l'installation informatique tels que disquettes, manuels d'utilisation, documents confidentiels, programmes, sauvegardes, sources et listings, des étagères 36 et 38 sont disposées à l'intérieur de l'enceinte 18 respectivement au dessus et en dessous de l'unité centrale 10. Bien entendu, on peut préférer d'autres éléments de rangement selon les besoins de l'application.

En fonction du lieu où se situe l'installation informatique, des risques encourus et du degré de protection désiré, l'enceinte 18 est munie d'autres accessoires optionnels. Ainsi, on peut prévoir sur ses parois des moyens permettant un scellement, en un ou plusieurs points, de l'ensemble de l'enceinte à des parties fixes externes : planchers, parois, châssis, structures fixes, etc.

L'extérieur de l'enceinte peut également présenter des signalisations diverses à l'aide de signaux lumineux ou sonores indiquant par exemple que l'enceinte est sous tension ou sous ventilation, que la température de sortie de l'air est excessive, qu'il y a des fumées ou un début d'incendie etc.

Le dispositif conforme à la présente invention procure les avantages suivants :
- Il constitue un moyen de protection efficace et de mise en oeuvre simple et rapide permettant à l'opérateur d'avoir accès, en une seule manipulation, à l'utilisation de l'ordinateur et à tous les supports d'informations s'y rapportant.
- La mise en fonctionnement de la protection n'implique pas l'interruption des opérations en cours contrairement à la plupart des dispositifs et moyens de la technique antérieure. Par suite, la réouverture de la porte permet de retrouver l'installation en l'état (avant fermeture de l'enceinte) à l'exception des traitements lancés dont l'exécution se sera poursuivie en l'absence de l'opérateur.
- La mise en oeuvre du dispositif ne nécessite ni tâche complexe, ni perte de temps. En raison du nombre de manipulations très réduit contrairement aux dispositifs connus jusqu'à ce jour, l'invention écarte tout risque d'utilisation trop ponctuelle par exemple uniquement en cas d'absence prolongée. L'invention constitue, par conséquent, une incitation naturelle au rangement et à la sécurité.
- La mise en place du dispositif conforme à l'invention peut être effectuée lors de la création proprement dite de l'installation informatique mais aussi sur un site préexistant. Dans ce dernier cas, son adaptation ne présente pas de surcoût particulier par rapport à celui d'autres dispositifs moins efficaces.
- Son encombrement n'empiète pas sur l'espace de travail habituel puisqu'il s'y intègre. Il constitue, de surcroît, un volume de rangement sûr, pouvant accepter d'autres objets habituellement mal protégés.
- La fiabilité du matériel informatique est renforcée par l'atténuation de la quantité de poussières, des chocs thermiques, etc. et la dépréciation née des salissures est limitée.
- En situation de protection, seules des parties ne contenant pas d'informations restent accessibles.
- Le confort d'utilisation peut être amélioré par la diminution du niveau sonore de l'ordinateur, la présence d'accessoires d'ordre esthétique, etc.
- Eu égard au caractère pratique et général du dispositif selon l'invention, à son efficacité et au fort développement de la micro-informatique, on peut prévoir une fabrication économique en série, de laquelle découle un faible coût d'investissement pour l'utilisateur.
- En ce qui concerne la protection intellectuelle, toute manipulation non autorisée, et en particulier l'introduction de virus, est impossible en raison de l'inaccessibilité des périphériques d'entrée d'informations ou de commande et notamment de la neutralisation des fonctions du clavier situé à l'extérieur de l'enceinte, mais aussi en raison de la neutralisation de l'écran de visualisation qui rend aveugle la personne non autorisée.
- Le niveau de sécurité offert à l'information est homogène quel qu'en soit le support : disques durs, disquettes, documents écrits, etc.

## Revendications

1. Dispositif pour la protection par confinement d'une installation informatique comportant au moins une unité centrale (10), et des périphériques d'entrée/sortie comprenant un élément d'affichage (12) et des moyens d'accès aux informations (14) et éventuellement un élément d'impression des informations (16), du type qui comprend une enceinte de confinement (18) munie d'une porte (20), destinée à renfermer au moins l'unité centrale (10) de ladite installation informatique, associée à des moyens de verrouillage et de déverrouillage de la transmission d'une tension pour respectivement verrouiller et déverrouiller les accès électroniques aux informations contenues dans l'installation informatique, lesdits moyens d'accès aux informations étant situés à l'extérieur de l'enceinte (18), porte fermée, étant caractérisé en ce que la porte (20) comporte des moyens de fermeture (22 - 24) et que la fermeture de ladite porte (20) enclenche lesdits moyens de verrouillage et de déverrouillage qui comprennent au moins un contact asservi à la porte (20) de ladite enceinte (18) et destiné à commander un circuit de sécurité, ledit circuit de sécurité comprenant un interrupteur (28) intercalé sur au moins l'une des lignes (30, 32 et/ou 34) reliant lesdits périphériques d'entrée/sortie (12, 14, 16) à l'unité centrale (10), moyennant quoi seuls les moyens d'accès sont neutralisés par la fermeture de la porte mais pas le fonctionnement de l'unité centrale (10).

2. Dispositif selon la revendication 1, caractérisé en ce que les moyens d'accès aux informations consistent en un clavier (14) .

3. Dispositif selon l'une des revendications 1 ou 2, caractérisé en ce que l'enceinte de confinement renferme en outre un ou plusieurs éléments connexes à l'installation.

4. Dispositif selon l'une des revendications 1 à 3, caractérisé en ce que l'enceinte de confinement est munie de prises extérieures permettant un raccordement à au moins un périphérique.

5. Dispositif selon l'une quelconque des revendications 1 à 4, caractérisé en ce que l'interrupteur (28) est intercalé sur la ligne (30) reliant les moyens d'accès aux informations (14) à l'unité centrale (10).

## Patentansprüche

1. Sicherheitsvorrichtung durch Einschluß einer Komputeranlage die mindestens eine Zentraleinheit (10) enthält und Eingangs/ Ausgangs peripheriegeräte mit einem Anzeigeelement (12) und mit Zugruffsmitteln Zu den Informationen (14) eventuell auch ein Drucker der Auskünfte (16) vom Typ mit einem Einschlußbehälter (18) der eine Tür (20) enthält, die mindestens die Zentralanlage enthalten soll, verbindet mit Verriegelung und Entriegelungsmitteln der Spannungsübertragung um die elektronischen Zugriffe an den Informationen zu ver -und-entriegeln, welche Informationenzugriffsmittel sich auswärts des Behälters (18) befinden, Tür geschlossen kennzeichnet indem die Tür (20) Schließelemente enthält (22 - 24) diese Verund-Entriegelungsmittel einschaltet, die mindestens einen Türversklavungskontakt dieses Behälters (18) einschließen und bestimmt eine Sicherheitsleitung, zu steuern, welche einen Schalter (28) enthält eingerheit auf mindestens eine der Leitungen (30, 32 und/oder 34)die diese Eingangs / Ausgangsperiepheriegeräte (12-14-16) mit der Zentraleinheit (10) verbindet, wodurch die Zugriffsmittel allein durch die Türschließunq unwirksam sind aber nicht die Wirkung der Zentraleinheit (10).

2. Vorrichtung nach dem Anspruch 1 kennzeichnet indem die Informationnenzugriffsmittel in einer Tastatur (14) bestehen.

3. Vorrichtung nach einem der Ansprüche 1 oder 2, kennzeichnet indem der Einschlußbehälter übrigens ein oder mehrere mit der Einrichtung verbundene Elemente enthält.

4. Vorrichtung nach einem der Ansprüche 1 bis 3, kennzeichnet indem der Einschlußbehälter mit Auswärtssteckern ausgestattet die eine Verbindung mit mindestens einem Peripheriegerät erlauben.

5. Vorrichtung nach einem der Ansprüche 1 bis 4, kennzeichnet indem der Schalter (28) auf der Leitung (30) die die Informationenzugriffsmittel (14) mit der Zentraleinheit (10) verbindet, eingereiht ist.

## Claims

1. Device restricting access for protecting a computer facility comprising at least a central unit (10) , and input/ ouput peripherals including a display unit (12) and access means to informations (14) and possibly a printer (16), which type includes a confining cabinet (18), equipped with a door (20), intended for containing at least the casing of a central processor unit (10) of said computer facility, associated with devices for locking and unlocking the transmission of a voltage to respectively lock and unlock electronic accesses to informations stored in the computer facility, said access means to informations being located outside the cabinet (18), the door being closed, the characteristic feature of which being that the door (20) comprises locking devices (22 - 24) and that the closing of said door engages said locking/ unlocking devices which include at least one contact operated by the door (20) of said cabinet (18) and intended to control a security device, which security device comprises a switch coming in between at least one of the lines (30,32 and/or 34) linking said input/output peripherals (12,14,16) to the central unit (10), in consideration of which the access means alones become ineffective when the door is closed but not the running of the central unit (10).

2. Device in accordance with claim 1 further comprising that the access means to information are a keyboard (14).

3. Device in accordance with claims 1 or 2 further comprising that the confining cabinet encloses additionally one or several devices connected to the computer facility.

4. Device in accordance with any of claims 1 up to 3 further comprising that the confining cabinet is equipped with one or several external plugs allowing a connection to at least one peripheral unit.

5. Device in accordance with any of claims 1 up to 4 further comprising that the switch (28) comes in between the line (30) linking access means to informations (14) to the central unit (10).
